# EUROPÄISCHE PATENTANMELDUNG

(11) **EP 1 477 699 A2**
(43) Veröffentlichungstag der Anmeldung: **17.11.2004**
(21) Anmeldenummer: 04008589.6
(22) Anmeldetag: 08.04.2004
(51) Int. Cl.: F16D 65/18

(54) **Scheibenbremse mit mechanischer Selbstverstärkung**

(30) Priorität: 12.05.2003 DE 10321159
(71) Anmelder: ROBERT BOSCH GMBH, 70442 Stuttgart (DE)
(72) Erfinder: Baumann, Dietmar, 71282 Hemmingen (DE); Hofmann, Dirk, 71636 Ludwigsburg (DE); Vollert, Herbert, 71665 Vaihingen/Enz (DE); Nagel, Willi, 71686 Remseck/Hochdorf (DE); Henke, Andreas, 34474 Diemelstadt (DE); Foitzik, Bertram, 71636 Ludwigsburg (DE); Goetzelmann, Bernd, 70378 Stuttgart (DE)

(57) **Zusammenfassung**

Die Erfindung betrifft eine, insbesondere elektromechanisch betätigte, Scheibenbremse (10) mit mechanischer Selbstverstärkung, beispielsweise mittels Keil-Rampen-Mechanismus (25, 27, 29), die zur Verwendung in Kraftfahrzeugen vorgesehen ist. Die Scheibenbremse (10) ist als Teilbelag-Scheibenbremse mit einem Festsattel (13) ausgebildet, bei der die Bremsscheibe (17) auf ihrer Drehachse (32) axial beweglich gelagert ist. Die Bremskräfte werden direkt in den Bremsenhalter (12) bzw. den Achsschenkel abgeleitet, so dass eine leichte, kompakte und einfache Bauweise für hohe Leistung ermöglicht wird.

## Beschreibung

### Stand der Technik

Die Erfindung geht aus von einer Scheibenbremse mit mechanischer Selbstverstärkung nach der im Oberbegriff des Anspruchs 1 näher angegebenen Gattung.

Es ist schon eine solche Scheibenbremse mit mechanischer Selbstverstärkung aus der WO 200210609 A1 bekannt. Diese weist eine Selbstverstärkungs-Mechanik mit einem Rampen- oder Keilmechanismus auf. Bei dieser Bauart ist ein Reibbremsbelag in Umfangsrichtung der Bremsscheibe verschiebbar angeordnet und stützt sich an einer im Bremssattel angebrachten Rampe oder dergleichen ab. Die Rampe ist eine schräg in einem Winkel zur Bremsscheibe verlaufende Stützfläche, die nicht notwendiger Weise eben sein muss, sondern auch gewölbt verlaufen kann. Wird der Reibbremsbelag zur Betätigung der Scheibenbremse gegen die Bremsscheibe gedrückt, so verschiebt die drehende Bremsscheibe auf Grund der zwischen ihr und dem Reibbremsbelag wirkenden Reibung den Reibbremsbelag in Umfangsrichtung. Durch die Ahstützung des Reibbremsbelag an der schräg zur Bremsscheibe verlaufenden Rampe ergibt sich eine Keilwirkung, die eine zusätzliche Andruckkraft des Reibbremsbelags an die Bremsscheibe bewirkt. Die genannte Andruckkraft des Reibbremsbelags gegen die Bremsscheibe ist größer als eine Betätigungskraft, die die Betätigungseinheit auf den Reibbremsbelag ausübt.

Beim Betätigen einer solchen Scheibenbremse mit Selbstverstärkung wird von der drehenden Bremsscheibe in Umfangsrichtung auf den Reibbremsbelag eine Reibungskraft ausgeübt, die über die Rampe in den Bremssattel eingeleitet wird. Von dort muss sie von einer nicht näher gezeichneten Bremssattelführung auf einen Bremsenträger oder ein sonstiges festes Bauteil übertragen werden. Dabei wirkt diese Kraft quer zur Bremssattelführung, die deshalb entsprechend stabil dimensioniert werden muss. Zugleich beeinträchtigt die beim Bremsen von der Bremssattelführung zu übertragende Kraft deren Leichtgängigkeit. Nachteilig ist nun, dass bei dieser Scheibenbremse in der Bauart als Teilscheibenbremse und mit Schwimmsattel keine näheren Angaben zur Art und Ausführung dieser Bremssattelführung und des Bremsenträgers gemacht sind.

Es wurde nun in einer älteren Anmeldung (Patentanmeldung 10 30 2516.2) der Anmelderin eine solche Bremssattelführung mit Bremsenträger bzw. Bremsenhalter für eine solche Scheibenbremse mit Selbstverstärkung vorgeschlagen, bei der sich die Selbstverstärkungs-Mechanik in einer Umfangsrichtung zur Bremsscheibe am Bremsenhalter und nicht am Bremssattel abstützt. Dadurch wird eine bei betätigter Scheibenbremse von der drehenden Bremsscheibe in Umfangsrichtung auf den Reibbremsbelag ausgeübte Reibungs- oder Bremskraft auf den Bremsenhalter übertragen und belastet nicht die Bremssattelführung, die den Bremssattel quer zur Bremsscheibe verschieblich am Bremsenhalter führt. Die Bremssattelführung ist dadurch im Wesentlichen kraftfrei, sie braucht insbesondere nicht die beim Bremsen auftretenden, hohen Bremskräfte zu übertragen. Die Bremssattelführung lässt sich dadurch vergleichsweise klein dimensionieren und ihre Leichtgängigkeit wird nicht durch auf sie ausgeübte Kräfte beeinträchtigt. Auch lässt sich hier eine leichtere Rückstellung des Bremssattels nach einer Bremsenbetätigung und insbesondere eine erleichterte Lüftspieleinstellung auf Grund der Leichtgängigkeit der Bremssattelführung erzielen. Nachteilig hierbei ist, dass die Bremssattelführung immer noch durch relativ hohe Querkräfte belastet wird; dies führt zu großen Abmessungen sowie einer großen Masse der Führung und wirkt sich ungünstig auf den Wirkungsgrad und die Kosten der Bremseinrichtung aus.

Ferner ist es aus der Druckschrift "Bosch - Konventionelle und Elektronische Bremssysteme, Gelbe Reihe, Ausgabe 2002, Seiten 52 bis 55" bekannt, bei konventionellen Scheibenbremsen, also ohne Selbstverstärkung, neben einer Bauweise mit Schwimmsattel eine solche mit Festsaftel anzuwenden. Bei solchen Scheibenbremsen mit Festsattel tritt aber diese Problematik der selbstverstärkenden Scheibenbremse nicht auf, da dort der Festsattel die Bremsbeläge trägt und die Bremskräfte abstützt, sowie das Lüftspiel selbsttätig einstellt. Auch wird bei dieser Bauweise mit Festsattel ein erforderlicher Bewegungsfreiheitsgrad dadurch erreicht, dass die auf beiden Seiten der Bremsscheibe angeordneten, hydraulisch betätigten und die Bremsbeläge tragenden Kolben in den Gehäusehälften des Festsattels hydraulisch miteinander verbunden sind. Von Nachteil ist nun, dass diese konventionellen, hydraulisch betätigten Scheibenbremsen in Festsattelbauart keinen elektromechanisch betätigten Selbstverstärkungs-Mechanismus aufweisen.

Aus der US-PS 4,476,965 ist ferner eine elektromagnetisch betätigbare Scheibenbremse bekannt, die zusätzlich über einen Kugel-Rampenmechanismus mechanisch lösbar ist. Hier ist eine Bremsscheibe auf ihrer Drehachse axial verschieblich angeordnet. Im übrigen wird hier keine selbstverstärkende Scheibenbremse mit elektromechanischer Betätigung gelehrt; auch werden ringförmige Vollscheiben-Bremsbeläge verwendet, die vor allem bei der Anwendung in Kraftfahrzeugen einige Nachteile aufweisen.

### Vorteile der Erfindung

Die erfindungsgemäße Scheibenbremse mit mechanischer Selbstverstärkung mit den kennzeichnenden Merkmalen des Hauptanspruchs hat demgegenüber den Vorteil, dass eine Scheibenbremse mit Selbstverstärkungs-Mechanik in einer Bauform mit Festsattel möglich ist, die zudem als Teilbelag-Scheibenbremse ausgeführt ist und die sich besonders für eine elektromechanische Betätigung eignet. Dadurch wird eine bei betätigten Scheibenbremsen von der drehenden Bremsscheibe in Umfangsrichtung auf den Reibbremsbelag ausgeübte Reib- oder Bremskraft auf den Festsattel und somit weiter auf den gehäusefesten Bremsenhalter übertragen, der zum Beispiel am Achsschenkel befestigt sein kann. Eine hoch belastete Bremssattelführung kann daher entfallen. Dadurch ergibt sich eine erhehliche Vereinfachung und Gewichtsreduzierung des Gesamtsystems und damit eine Kostenersparnis. Zudem wird der Bauraum für die selbstverstärkende Scheibenbremse verringert, was sich besonders vorteilhaft auswirkt, da die Scheibenbremse an kritischen Stellen im Kraftfahrzeug eingebaut werden muss. Auch lässt sich bei dieser Scheibenbremse der Wirkungsgrad beim Betätigen der Bremse verbessern. In Folge der geringen Abschirmung durch die Bauart als Teilbelag-Scheibenbremse lässt sich die thermische Deformation der Bremsscheibe bei starker Belastung minimieren. Weiterhin ergibt sich bei dieser Bauweise eine einfache Lüftspieleinstellung und damit eine Vermeidung von Restbremsmomenten. Die Bremsscheibe kann durch ein elastisches Element auf einfache Weise in eine vom Verschleißzustand der Bremse abhängige Ruheposition bewegt werden, in der kein Kontakt zwischen Bremsscheibe und Bremsbelägen besteht.

Durch die in den Unteransprüchen aufgeführten Maßnahmen sind vorteilhafte Weiterbildungen und Verbesserungen der im Hauptanspruch angegebenen Scheibenbremse mit mechanischer Selbstverstärkung möglich. Insbesondere ergibt die Scheibenbremse mit Selbstverstärkungs-Mechanik in Verbindung mit einer Bauweise als Festsattelbremse und als Teilbelagbremse und mit axial beweglicher Bremsscheibe eine besonders vorteilhafte Kombination, die sich zudem für eine elektromechanische oder hydromechanische Betätigung besonders günstig eignet.

Die Abstützung der Selbstverstärkungs-Mechanik quer zur Bremsscheibe erfolgt bei der erfindungsgemäßen Bremsscheibe unverändert am Bremssattel, so dass eine Andruckkraft des einen Radbremsbelags gegen die Bremsscheibe als innere Kraft vom Bremssattel auf den anderen Reibbremsbelag übertragen wird.

### Zeichnung

Ein Ausführungsbeispiel der Erfindung ist in der Zeichnung dargestellt und in der nachfolgenden Beschreibung näher erläutert. Es zeigen
- Figur 1: eine erfindungsgemäße Scheibenbremse radial von innen, d.h. aus Richtung einer Drehachse einer Bremsscheibe in vereinfacher Darstellung,
- Figur 2: eine Vorderansicht der Scheibenbremse nach Figur 1 in verkleinertem Maßstab und vereinfachter Darstellung.

### Beschreibung des Ausführungsbeispiels

Die in der Zeichnung dargestellte, erfindungsgemäße Scheibenbremse 10 weist eine eingebaute Selbstverstärkungs-Mechanik 11 auf und wird elektromechanisch betätigt. Sie ist zur Verwendung in einem nicht dargestellten Kraftfahrzeug vorgesehen.

Die selbstverstärkende Scheibenbremse 10 weist einen Bremsenhalter 12 auf, der beispielsweise mit einem Achsschenkel (nicht dargestellt) eines Kraftfahrzeugs fest verbunden wird. An dem Bremsenhalter 12 ist ein Bremssattel 13 unbeweglich befestigt, so dass hier von einem sogenannten Festsattel 13 gesprochen wird.

Im Querschnitt weist der Festsattel eine U-Form mit zwei Schenkeln 14, 15 und einem Joch 16 auf. Das Joch 16 befindet sich außerhalb eines Umfangs einer Bremsscheibe 17, während sich die beiden Schenkel 14, 15 beiderseits der Bremsscheibe 17 befinden. Die beiden Schenkel 14, 15 ragen radial in Bezug auf die Bremsscheibe 17 in etwa gleich weit nach innen wie zwei Reibbremsbeläge 18, 19. Die Reibbremsbeläge 18, 19 erstrecken sich nur über einen Teil des Umfangs der Bremsscheibe 17, so dass hier von einer Bauart als Teilbelag-Scheibenbremse 10 gesprochen wird.

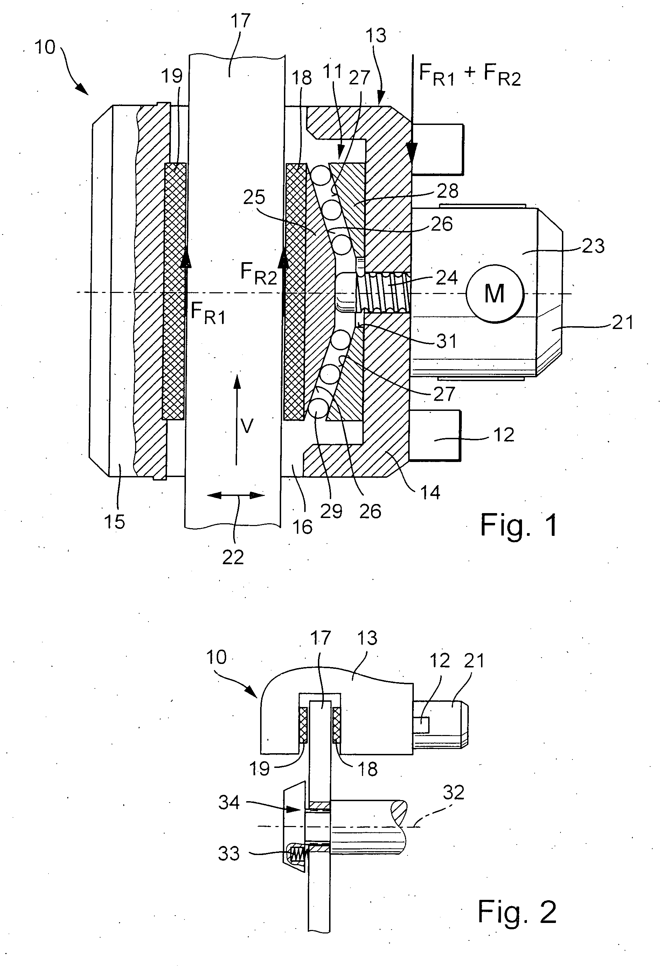

Die beiden Reibbremsbeläge 18, 19 liegen beiderseits der Bremsscheibe 17 im Festsattel 13 ein. Zum Betätigen der Scheibenbremse 10 ist der in der Zeichnung rechts dargestellte Reibbremsbelag 18 mittels einer noch zu erläuternden Betätigungseinheit 21 gegen die Bremsscheibe 17 drückbar. Durch das Andrücken des einen Reibbremsbelags 18 verschiebt sich die Bremsscheibe 22 auf Grund eines Bewegungsfreiheitsgrades 22, auf den später näher eingegangen wird, in Richtung ihrer Drehachse und drückt dabei gegen den anderen Reibbremsbelag 19 auf der anderen Seite der Bremsscheibe 17, so dass die Bremsscheibe 17 von beiden Reibbremsbelägen 18, 19 gebremst wird. Bei der in Figur 1 beispielsweise dargestellten Drehrichtung v werden dabei von dem linken Reibbremsbelag 19 die Reibungskraft F_{R1} und vom rechten Reibbremsbelag 18 die gleich große Reibungskraft F_{R2} erzeugt, die in den Festsattel 13 eingeleitet werden.

Die Betätigungseinheit 21 arbeitet elektromechanisch. Von der Betätigungseinheit 21 ist in der Figur 1 ein Gehäuse 23 von außen sichtbar, in dem die Teile der Betätigungseinheit 21 untergebracht sind. Die Betätigungseinheit 21 weist einen Elektromotor und vorzugsweise ein Untersetzungsgetriebe sowie vorzugsweise einen Spindeltrieb oder ein sonstiges Rotations-Translations-Umsetzungsgetriebe auf. Zur platzsparenden und kompakten Ausbildung der Betätigungseinheit 21 kann der Elektromotor beispielsweise als Hohlwellenmotor ausgebildet und der Spindeltrieb innerhalb der Hohlwelle des Elektromotors angeordnet sein. Das Untersetzungsgetriebe ist vorzugsweise ein Planetengetriebe, das ebenfalls zumindest teilweise innerhalb der Hohlwelle des Elektromotors unterbringbar ist. Derartige Betätigungseinheiten 21 sind dem Fachmann an sich bekannt; es wird diesbezüglich beispielhaft auf die WO 96/03301 verwiesen, die hinsichtlich einer Ausbildungsmöglichkeit der Betätigungseinheit 21 hiermit in Bezug genommen wird. Die Betätigungseinheit 21 ist somit fest und starr am Festsattel 13 angebracht. Es sind auch andere Betätigungseinheiten möglich; so lässt sich beispielsweise die Scheibenbremse 10 auch hydraulisch betätigen.

Eine vom Elektromotor angetriebene Spindel 24 des Spindeltriebs der Betätigungseinheit 21 beaufschlagt den rechten Reibbremsbelag 18 und drückt diesen zur Betätigung der Scheibenbremse 10 gegen die Bremsscheibe 17. Der rechte Reibbremsbelag 18 weist eine Doppelrampe 25 mit zwei Rampenflächen 26 an seiner der Bremsscheibe 17 abgewandten Seite auf. Die beiden Rampenflächen 26 verlaufen schräg in einem spitzen Winkel zur Bremsscheibe 17, wobei die Schrägen der Rampenflächen 26 einander entgegen gerichtet sind, so dass zwei Keile gebildet werden. Mit ihren Rampenflächen 26 stützt sich die Doppelrampe 25 an Widerlagerflächen 27 eines Widerlagers 28 ab. Das Widerlager 28 ist ein plattenförmiges Element mit einer V-förmigen Ansenkung, die die beiden Widerlagerflächen 27 bildet. Die Widerlagerflächen 27 stehen in einem großen, stumpfen Winkel zueinander, sie verlaufen parallel zu den Rampenflächen 26. Zur Reibungsminderung sind Wälzkörper (Rollen 29) zwischen den Rampenflächen 26 und den Widerlagerflächen 27 angeordnet.

Das Widerlager 28 ist parallel zur Bremsscheibe 17, d.h. in deren Umfangsrichtung im Bremssattel 13, aufgenommen; dabei ist das als Keilabstützung dienende Widerlager 28 fest am einen Schenkel 14 und damit auch am Festsattel 13 angeordnet. Das Widerlager 28 weist in seiner Mitte ein Durchgangsloch 31 auf, das die Spindel 24 mit Spiel umgibt, so dass das Widerlager 28 keine Kräfte auf die Spindel 24 ausübt. Die Doppelrampe 25 und das Widerlager 28 bilden somit Teile der Selbstverstärkungs-Mechänik 11 der Scheibenbremse 10.

Der andere Reibbremsbelag 19 stützt sich im Festsattel 13 ab und liegt in Querrichtung zur Bremsscheibe 17 am anderen Schenkel 15 des Festsattels 13 an.

Wie die Figur 2 näher zeigt, in welcher die Scheibenbremse 10 nach Figur 1 in einer vereinfachten und verkleinerten Vorderansicht dargestellt ist, ist die Bremsscheibe 17 auf ihrer zugehörigen Raddrehachse 32 axial beweglich angeordnet und durch ein elastisches Element, zum Beispiel eine Feder 33, abgestützt. Die Scheibenbremse 10 erhält damit einen erforderlichen Bewegungsfreiheitsgrad 22 in axialer Richtung ihrer Drehachse, so dass im Betrieb auftretende elastische Aufweitungen des Festsattels 13 oder zum Beispiel ein Verschleiß von Reibbremsbelägen 18, 19 ausgeglichen werden kann. Die axiale Beweglichkeit der Bremsscheibe 17 lässt sich auf einfache und vorteilhafte Weise durch eine Zahnprofilführung 34 am Innendurchmesser der Bremsscheibe 17 erreichen.

Die Wirkungsweise der Scheibenbremse 10 mit Selbstverstärkungs-Mechanik 11 wird wie folgt erläutert:

Wird zur Betätigung der Scheibenbremse 10 der Reibbremsbelag 18 mit der Betätigungseinheit 21 gegen die sich drehenden Bremsscheibe 17 gedrückt, so übt die Bremsscheibe 17 eine Reibungskraft F_{R2} auf den Reibbremsbelag 18 in Umfangsrichtung der Bremsscheibe 16 aus, also parallel zur Bremsscheibe 17. Der Reibbremsbelag 18 wird dadurch parallel zur Bremsscheibe 17, in der Zeichnung abhängig von der angegebenen Drehrichtung v der Bremsscheibe 17 nach oben (oder bei entgegengesetzter Drehrichtung nach unten) verschoben. Dabei stützt sich der Reibbremsbelag 18 über eine seiner beiden Rampenflächen 26 an der zugeordneten Widerlagerfläche 27 ab. Durch den schrägen Verlauf der Rampenfläche 26 und der Widerlagerfläche 27 ergibt sich eine Keilwirkung, die eine Andruckkraft des Reibbremsbelags 18 an die Bremsscheibe 17 bewirkt. Diese Andruckkraft addiert sich zur Betätigungskraft, mit der die Betätigungseinheit 21 den Reibbremsbelag 18 gegen die Bremsscheibe 17 drückt. Die Kraft, mit der der Reibbremsbelag 18 gegen die Bremsscheibe 16 gedrückt wird, ist dadurch größer, als die von der Betätigungseinheit 21 auf den Reibbremsbelag 18 ausgeübte Betätigungskraft. Die Scheibenbremse 10 weist damit eine Selbstverstärkung auf mechanischem Wege auf. Die Doppelrampe 25 und das Widerlager 28 bilden dabei die Selbstverstärkungs-Mechanik 11, welche die Selbstverstärkung der Scheibenbremse 10 ergibt.

Durch die axial wirkende Kraft des rechten Reibbremsbelags 18 auf die Bremsscheibe 17 wird diese axial zu ihrer Drehachse 32 verschoben, wodurch sich die andere Seite der Bremsscheibe 17 an den linken Reibbremsbelag 19 anlegt. Des weiteren werden die Reibbremsbeläge 18, 19 elastisch komprimiert und zudem auch der feststehende Bremssattel 13 elastisch aufgeweitet. Dabei wird die Bremsscheibe 17 weiter bewegt.

Der von der Reibungskraft F_{R2} ausgehende Kraftfluss wirkt vom rechten Reibbremsbelag 18 über die als Keil wirkende Doppelrampe 25 und die Rollen 29 auf das Widerlager 28 und weiter über den rechten Schenkel 14 des Festsattels 13 auf den Bremsenhalter 12 und damit in den Achsschenkel. Die Reibungskraft F_{R1} wird dagegen direkt vom Festsattel 13 aufgenommen und in den Achsschenkel eingeleitet. In der Figur 1 ist schematisch die Reaktionskraft F_{R1} + F_{R2} angegeben, die vom Achsschenkel auf den an ihm befestigten Bremsenhalter 12 wirkt und die den Reibungskräften das Gleichgewicht hält. Die Bewegung der Bremsscheibe 17 in Querrichtung erfolgt gegen das elastische Federelement 33.

Beim Lösen der Scheibenbremse 10 wird die Bremsscheibe 17 durch das elastische Federelement 33 in eine Ruheposition zurück bewegt. Dabei befindet sich die Bremsscheibe 17 nicht mehr in Kontakt mit den Reibbremsbelägen 18, 19, so dass Restbremsmomente vermieden werden. Überschreitet der Verschleiß des Reibbremsbelags 18 eine Grenze, so wird die Ruheposition der Bremsscheibe 17 gemeinsam mit dem elastischen Element 33 in Richtung des linken Reibbremsbelags 19 verschoben.

Durch die Verwendung der Doppelrampe 25 ist die Selbstverstärkung in beiden Drehrichtungen der Bremsscheibe 17 gegeben. Reicht eine Selbstverstärkung für eine Drehrichtung der Bremsscheibe 17 aus, dann genügt eine einfache Rampe an Stelle der Doppelrampe 25. Durch in beiden Drehrichtungen unterschiedliche Rampenwinkel der Doppelrampe 25 lassen sich unterschiedlich große Selbstverstärkungen für die beiden Drehrichtungen der Bremsscheibe 17, also beispielsweise für Vor- und Rückwärtsfahrt, erzielen. Bei Bedarf kann auch eine veränderliche Verstärkung erzielt werden, wobei gekrümmte Rampen verwendet werden.

Vorliegende Scheibenbremse 10 mit mechanischer Selbstverstärkung hat somit keine hoch belasteten Führungen für den Bremssattel. Dadurch baut das Bremssystem erheblich leichter, kostengünstiger und ist durch kompakte Bauweise an kritischen Einbaustellen besser einsetzbar. Der Wirkungsgrad beim Betätigen der Scheibenbremse wird verbessert und die thermische Belastbarkeit gesteigert. Luftspieleinstellung und Verschleiß lassen sich leichter beherrschen; zudem kann die Bremsscheibe leicht austauschbar angeordnet werden. Die mechanisch selbstverstärkende Scheibenbremse in Teilbelag-Bauart und mit querbeweglicher Bremsscheibe stellt daher eine besonders vorteilhafte Kombination dar, die sich zudem gut für elektrische oder hydraulische Betätigung eignet.

Selbstverständlich sind Änderungen an der gezeigten Ausführungsform möglich, ohne vom Gedanken der Erfindung abzuweichen. Die Selbstverstärkungs-Mechänik kann anstelle des gezeigten Keil-Rampen -Mechanismus auch in anderer Weise ausgeführt werden, zum Beispiel mit einer Hebel -Mechanik. Ferner läßt sich die Selbstverstärkungs-Mechanik auch so ausbilden, daß sie anstelle der Selbstverstärkung für beide Drehrichtungen der Bremsscheibe nur in einer einzigen Drehrichtung selbstverstärkend wirkt. Anstelle des Umsetzungsgetriebes mit einer Spindel lassen sich auch solche Getriebe mit Zahnrad und Zahnstange verwenden. Weiterhin läßt sich als elastisches Element anstelle der gezeichneten Feder auch ein Gummielement verwenden, auf dem die Ruheposition der Bremsscheibe bei Belagverschleiß nachgeführt wird.

## Patentansprüche

1. Scheibenbremse mit mechanischer Selbstverstärkung, insbesondere für Kraftfahrzeuge, mit einem Bremsenhalter, mit einem Bremssattel und mit einer Betätigungseinheit, mit der ein Reibbremsbelag gegen eine Bremsscheibe drückbar ist und mit einer Selbstverstärkungs-Mechanik, die eine Andruckkraft des Reibbremsbelags gegen die Bremsscheibe erhöht, wobei die Scheibenbremse nach Art einer Teilbelag-Scheibenbremse ausgeführt ist, **dadurch gekennzeichnet, dass** bei der Scheibenbremse (10) der Bremssattel als Festsattel (13) ausgebildet ist, der fest mit dem Bremsenhalter (12) verbunden ist und dass die Bremsscheibe (17) axial beweglich auf der ihr zugeordneten Drehachse (32) angeordnet ist.

2. Scheibenbremse nach Anspruch 1, **dadurch gekennzeichnet, dass** die Selbstverstärkungs-Mechanik (11) auf einer einzigen Seite der Bremsscheibe (17) angeordnet ist.

3. Scheibenbremse nach Anspruch 1 oder 2, **dadurch gekennzeichnet, dass** die Selbstverstärkungs-Mechanik (11) einen Keil-Rampen-Mechanismus (25, 28) aufweist.

4. Scheibenbremse nach einem der Ansprüche 1 bis 3, **dadurch gekennzeichnet, dass** die Selbstverstärkungs-Mechanik (11) mindestens ein bewegliches und ein unbewegliches Mechanikteil (25, 28) aufweist, von denen das bewegliche Mechanikteil (25) an die Bremsscheibe (17) grenzt und in einer Umfangsrichtung zur Bremisscheibe (17) verschiebbar im Bremssattel (13) aufgenommen ist.

5. Scheibenbremse nach Anspruch 4, **dadurch gekennzeichnet, dass** das unbewegliche Mechanikteil (28) am Festsattel (13) fest angeordnet ist.

6. Scheibenbremse nach einem der Ansprüche 1 bis 5, **dadurch gekennzeichnet, dass** die Selbstverstärkungs-Mechanik (11) für beide Drehrichtungen der Bremsscheibe (17) wirksam ausgebildet ist.

7. Scheibenbremse nach einem oder mehreren der Ansprüche 1 bis 6, **dadurch gekennzeichnet, dass** der von der Selbstverstärkungs-Mechanik (11) abgewandten Seite der Bremsscheibe (17) der andere Bremsbelag zugeordnet ist, der fest im Festsattel (13) angeordnet ist.

8. Scheibenbremse nach einem der Ansprüche 1 bis 7, **dadurch gekennzeichnet, dass** der von der Selbstverstärkungs-Mechanik (11) abgewandten Seite der Bremsscheibe (17) der anderen Bremsbelag zugeordnet ist, der fest im Festsattel (13) angeordnet ist.

9. Scheibenbremse nach Anspruch 8, **dadurch gekennzeichnet, dass** die Betätigungseinheit (21) aus einem Elektromotor und einem Rotations-Translations-Umsetzungsgetriebe mit einer Spindel (24) besteht, welche den einen Bremsbelag (18) gegen die Bremsscheibe (17) drückt.

10. Scheibenbremse nach einem der Ansprüche 1 bis 7, **dadurch gekennzeichnet, dass** die Scheibenbremse eine hydraulische Betätigungseinheit aufweist.

11. Scheibenbremse nach einem oder mehreren der Ansprüche 1 bis 10, **dadurch gekennzeichnet, dass** die Bremsscheibe (17) im Bereich ihres Innendurchmessers axial beweglich auf der Drehachse (32) geführt ist, insbesondere durch eine Zahnprofilführung (34).

12. Scheibenbremse nach Anspruch 11, **dadurch gekennzeichnet, dass** der Bremsscheibe (17) ein elastisches Element (33) zum Rückstellen in ihre Ruheposition nach dem Lösen der Bremse zugeordnet ist.
